# EUROPÄISCHE PATENTSCHRIFT

(11) **EP 0 823 500 B1**
(45) Veröffentlichungstag und Bekanntmachung des Hinweises auf die Patenterteilung: **23.04.2003**
(21) Anmeldenummer: 97111236.2
(22) Anmeldetag: 04.07.1997
(51) Int. Cl.: D01F 6/84

(54) **POY-Polyesterfaser für Strecktexturierung und Verfahren zu deren Herstellung**
POY polyester fiber for draw texturing and process for its production
Fibre POY en polyester pour étirage-texturation et procédé pour sa production

(30) Priorität: 01.08.1996 DE 19631069
(43) Veröffentlichungstag der Anmeldung: 11.02.1998
(73) Patentinhaber: Zimmer Aktiengesellschaft, 60388 Frankfurt am Main (DE)
(72) Erfinder: Schumann, Heinz-Dieter, Dr., 63477 Maintal (DE); Thiele, Ulrich, Dr., 63486 Bruchköbel (DE)

(56) Entgegenhaltungen:
- DE-A- 2 708 790
- DE-A- 2 728 095
- DE-A- 2 746 338
- DE-B- 1 243 819

## Beschreibung

Die vorliegende Erfindung betrifft eine mit Aufspulgeschwindigkeiten von mindestens 3000 m/min ersponnene, vororientierte, nicht-verstreckte Polyesterfaser (POY-Faser), die zur Weiterverarbeitung durch Strecktexturierung bei Geschwindigkeiten von über 500 m/min geeignet ist, sowie ein Verfahren zu deren Herstellung.

Die Entwicklung eines Verfahrens zur Herstellung von POY-Polyesterfasern, die bei Geschwindigkeiten von über 500 m/min strecktexturiert werden können, ist von großem wirtschaftlichen Interesse, da so pro kg POY-Fasern der Investitionsaufwand reduziert und die Produktivität wesentlich erhöht werden kann. Bei nichtmodifiziertem Polyethylenterephthalat stellt sich bei einer Aufspulgeschwindigkeit von etwa 3200 bis 3400 m/min die für die Strecktexturierung mit etwa 500 m/min mindestens erforderliche Bruchdehnung von etwa 110 bis 125 % ein. Erhöht man die Aufspulgeschwindigkeit bei sonst gleichbleibenden Spinnbedingungen, so reduziert sich aufgrund der steigenden Orientierung der Fasern die Dehnung, was zu einer Reduzierung der Strecktexturier-Geschwindigkeit zwingt und letztendlich die Texturierung unmöglich macht, da die Faserkapillaren unter der Drallbelastung brechen.

Aus der Patentliteratur sind verschiedene Prinzipien bekannt, die eine Erhöhung der Strecktexturiergeschwindigkeit ermöglichen. So wird der Zusatz von bis zu 10 meq/kg bestimmter kettenverzweigender Substanzen, wie Pentaerythrit, Trimethylolpropan, Mellitsäure oder Trimersäure (GB-Patent 1 553 020), Trimesinsäure oder Trimellitsäure (EP-Patent 0 263 603) oder Tetraethylsilikat (US-Patent 4 966 740), während der Polyesterherstellung beschrieben. Nachteilig hierbei ist einerseits eine Texturiergeschwindigkeit von beispielsweise weniger als 200 m/min bei Einsatz der Polyhydroxyverbindungen und andererseits eine schwankende Faserqualität infolge Bildung flüchtiger Ethylenglykolester bei Einsatz von Polycarbonsäuren oder Zersetzung durch Reaktionswasser bei Einsatz von Tetraethylsilikat. Außerdem sind diese Zusätze teilweise toxisch.

Es ist des weiteren bekannt, bei der Polyesterherstellung ausschließlich nach dem Umesterungsverfahren, vor der Polykondensation Carboxyphosphonsäure-Verbindungen der Formel 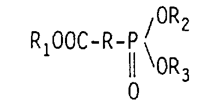 zur Komplexierung des Umesterungskatalysators zuzusetzen, wobei R₁, R₂, R₃ gleich Alkyl (US-Patent 4 254 018, EP 0699 700 A, JP 49-125 494 A) bzw. gleich -H oder Alkyl (US-Patent 3 169 944) ist. Keines dieser Schutzrechte erwähnt die Herstellung von POY-Fasern und/oder die Strecktexturierung. Der Zusatz von 500 bis 50000 ppm (in den Beispielen 2000 bis 4500 ppm) Phosphor als Verbindung vorstehender Formel, wobei R₁, R₂ und R₃ gleich Kohlenwasserstoffrest oder -H ist, zu Beginn der Veresterung oder Umesterung, nachfolgende Polykondensation sowie Verspinnen und Verstrecken "in konventioneller Weise" ergibt Polyesterfasern mit verbesserter Flammfestigkeit (US-Patent 4 086 208). Beispiele mit Verbindungen bei denen R₁, R₂ und/oder R₃ gleich -H ist, fehlen. Auch werden weder Strecktexturiergeschwindigkeiten von über 500 m/min noch die Herstellung von zur Strecktexturierung geeigneter POY-Fasern erwähnt.

Aufgabe der vorliegenden Erfindung ist es eine weitere, mit Aufspulgeschwindigkeiten von mindestens 3000 m/min ersponnene, vororientierte, nichtverstreckte Polyesterfaser, die zur Weiterverarbeitung durch Strecktexturierung mit Geschwindigkeiten von über 500 m/min geeignet ist, sowie ein von den vorstehend genannten Nachteilen möglichst freies Verfahren zu deren Herstellung zur Verfügung zu stellen.

Die Lösung dieser Aufgabe erfolgt erfindungsgemäß durch eine vororientierte, nichtverstreckte Polyesterfaser, welche dadurch gekennzeichnet ist, daß der Polyester ein Copolyester mit überwiegend Ethylenterephthalat-Einheiten und bis zu 10 Masse-% von anderen Dicarbonsäuren und/oder Diolen abgeleiteten Einheiten sowie Carboxyphosphonsäure-Einheiten der Formel 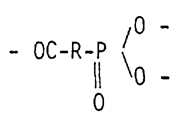 wobei R = C₁₋₁₀-Alkylen, -Cycloalkylen oder -Arylen ist, in einer 30 bis 500 ppm, vorzugsweise 60 bis 300 ppm Phosphor, bezogen auf Polyester, entsprechenden Menge ist.

Die erfindungsgemäß gestellte Aufgabe wird desweiteren durch ein Verfahren zur Veresterung von Terephthalsäure mit Ethylenglykol, die zu einem geringen Teil durch andere Dicarbonsäuren und/oder Diole ersetzt sein können, nachfolgende Vorkondensation und Polykondensation sowie Verspinnen in der Schmelze des erhaltenen Polyesters bei Aufspulgeschwindigkeiten von mindestens 3000 m/min gelöst, welches sich dadurch auszeichnet, daß dem Reaktionsgemisch vor der Vorkondensation eine Carboxyphosphonsäure-Verbindung der Formel 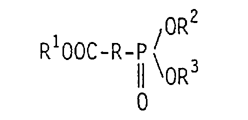 wobei zwei der Gruppen R¹, R² und R³ gleich -H und die dritte Gruppe gleich -H oder C₁₋₁₀-Alkyl, -Cycloalkyl oder -Aryl und R gleich C₁₋₁₀-Alkylen, - Cycloalkylen oder -Arylen ist, in einer 30 bis 500 ppm, vorzugsweise 60 bis 300 ppm Phosphor, bezogen auf Polyester, entsprechenden Menge zugesetzt wird.

Überraschend wurde gefunden, daß sich der erfindungsgemäß Carboxylphosphonsäure-Einheiten enthaltende Polyester bei Aufspulgeschwindigkeiten von mindestens 3000 m/min und üblichen Temperaturen im Bereich von 280 bis 310 °C, je nach Comonomer-Anteil, bestens zu POY-Fasern hoher Gleichmäßigkeit verspinnen läßt. Diese POY-Fasern weisen eine höhere Bruchdehnung auf, als unter gleichen Bedingungen ersponnene Fasern aus nichtmodifiziertem Polyethylenterephthalat, und lassen sich hervorragend durch Streckzwirnen oder bevorzugt Strecktexturieren bei Geschwindigkeiten von mindestens 500 m/min, vorzugsweise mindestens 600 m/min zu DT- oder DTY-Garn mit normaler Dehnung und guter Festigkeit verarbeiten. So weisen mit 3200 m/min ersponnene POY-Fasern aus dem erfindungsgemäßen Polyester mit mindestens 98 Masse % Ethylenterephthalat-Einheiten eine Bruchdehnung von mindestens 130 % auf. Die daraus hergestellten DTY-Garne haben eine Dehnung von etwa 20 - 25 % und eine Festigkeit von teilweise über 40 cN/tex. Die ausgezeichnete Verstreckbarkeit der erfindungsgemäßen POY-Fasern ermöglicht einen bis zu etwa 10 % höheren Spinndurchsatz, indem POY-Fasern mit höherem Titer, der im nachfolgenden Streckprozeß durch höhere Verstreckung auf den Normaltiter gebracht wird, ersponnen werden. Sogar bei der Weiterverarbeitung durch Weben oder Kettwirken konnte eine verringerte Fehlerquote und eine erhöhte Produktivität erreicht werden.

Das Schmelzspinnen kann in beliebiger, bekannter Weise vorgenommen werden, beispielsweise nach den Verfahren der US-Patente 4 940 559 oder 5 340 517. Hierbei kann die Polyesterschmelze nach der Polykondensation direkt versponnen werden oder zunächst granuliert und das Granulat vor dem Verspinnen erneut aufgeschmolzen werden. Das Streckzwirnen bzw. die Strecktexturierung erfolgen unter Verwendung handelsüblicher Vorrichtungen, vorzugsweise mit hoher Verarbeitungsgeschwindigkeit.

Die Herstellung des Polyesters erfolgt in an sich bekannter Weise kontinuierlich oder diskontinuierlich durch Direktveresterung von Terephthalsäure mit Ethylenglykol, nachfolgende Vorkondensation und Polykondensation, wobei erfindungsgemäß dem Reaktionsgemisch vor der Vorkondensation, zu Beginn oder während der Veresterung, vorzugsweise wenn etwa 50 - 80 % der Carboxylgruppen der polyesterbildenden Dicarbonsäure(n) verestert sind, eine Carboxyphosphonsäure-Verbindung zugesetzt wird. Der Veresterungsgrad (U) kann hierbei aus der Verseifungszahl (V_{Z}) und der Säurezahl (S_{Z}) des Reaktionsgemisches gemäß U = (V_{Z}-S_{Z}) · 100/V_{Z} berechnet werden. Die Verseifungszahl wird durch Verseifung mit Kaliumhydroxid in n-Propanol und potentiometrische Titration und die Säurezahl durch potentiometrische Titration in Dimethylformamid bestimmt.

Terephthalsäure und/oder Ethylenglykol können zu einem geringen Teil durch andere Dicarbonsäuren und/oder Diole, wie beispielsweise Isophthalsäure, 1,4-Cyclohexandicarbonsäure, 2,6-Naphthalindicarbonsäure, p-Hydroxybenzoesäure, 4,4'-Biphenyldicarbonsäure, Adipinsäure, Diethylenglykol, 1,4-Butandiol, 1,4-Cyclohexandimethanol, ersetzt sein. Der Anteil dieser Comonomere sollte etwa 10 Masse-% im Polyester nicht überschreiten, da andernfalls die Fasereigenschaften von denen von Polyethylenterephthalat-Fasern zu stark abweichen. Bevorzugter Polyester ist Polyethylenterephthalat. Die Kondensation erfolgt in Gegenwart üblicher Katalysatoren, wie Antimon-, Titanund/oder Germanium-Verbindungen. Pigmente, wie Titandioxid, und gegebenenfalls Farbstoffe können dem Reaktionsgemisch zugesetzt werden.

Überraschenderweise polykondensiert das erfindungsgemäße Reaktionsgemisch schneller als Reaktionsgemische ohne Carboxyphosphonsäure-Verbindung, d. h. die gewünschte Polyester-Endviskosität wird bereits nach einer bis zu 10 % kürzeren Vorkondensations- und Polykondensationsdauer erreicht. Noch stärker ausgeprägt ist die beschleunigende Wirkung bei einer eventuell anschließenden Festphase-Polykondensation.

Durch die Zugabe vor der Polykondensation wird ein vollständiger Einbau der Carboxyphosphonsäure-Verbindung in das Polyestermolekül unter Ausbildung von Langkettenverzweigungen gewährleistet. Diese Lankettenverzweigungen führen zu einer veränderten Viskoelastizität des Polyesters, d. h. die Polyesterschmelze wird kompressibel, kann Druckschwankungen aufnehmen und dämpft diese sowie die beim Spinnen auftretenden Fadenschwingungen, mit der Folge gleichmäßigerer POY-Fasern. Außerdem führt der Einbau in das Polymermolekül zu einer permanenten, thermischen und thermooxidativen Stabilisierung des Polyesters. Herkömmliche Stabilisatoren, wie phosphorige Säure, Phosphorsäure oder deren Ester, werden nicht benötigt, können aber in üblicher Weise zusätzlich verwendet werden.

Als Carboxyphosphonsäure-Verbindung wird bevorzugt die freie Säure 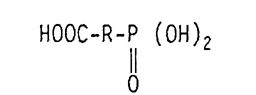 eingesetzt, wobei R eine C₁₋₁₀-Alkylen-, -Cycloalkylen- oder -Arylen-Gruppe, insbesondere eine Ethylengruppe ist. Eine der drei Säuregruppen kann auch als C₁₋₁₀-Alkyl-, -Cycloalkyl- oder -Aryl-Estergruppe, insbesondere als Ethylestergruppe vorliegen. Hierbei kann die veresterte Gruppe sowohl die Carboxylgruppe als auch eine der sauren Gruppen der Phosphonsäure sein. Die Copolymerisation und Langkettenverzweigung erfolgt in diesem Fall sowohl durch Direktveresterung als auch durch Umesterung. Da die Veresterung leichter abläuft als die nichtkatalysierte Umesterung, ist so eine gewisse Steuerung der Verzweigungsart möglich.

Die Menge an zuzusetzender Carboxyphosphonsäure-Verbindung entspricht 30 bis 500 ppm, vorzugsweise 60 bis 300 ppm Phosphor, bezogen auf Polyester. Die genaue Menge hängt etwas vom Comonomeranteil des Polyesters ab. Für Polyester mit mindestens 98 Masse-% Ethylenterephthalat-Einheiten liegt das Optimum bei 100 bis 150 ppm Phosphor. Bei zu geringer Menge ist die Verspinnbarkeit ausreichend, die Dehnung der mit hoher Geschwindigkeit gesponnenen POY-Filamente jedoch zu gering für die Strecktexturierung. Bei etwas zu hoher Menge läßt zunächst nur die Festigkeit des DTY-Garnes zu wünschen übrig, während bei deutlich zu hoher Menge der Polyester nicht mehr gut und gleichmäßig verspinnbar ist. Da die Carboxyphosphonsäure-Verbindungen unter den Bedingungen der Polyester-Synthese weder flüchtig sind, noch flüchtige Verbindungen bilden, kann die Dosierung ohne Berücksichtigung eventueller Verluste erfolgen. Auch treten bei Rückführung von nichtgereinigtem Spaltglykol keine Störungen durch mitgerissene Carboxyphosphonsäure-Verbindungen auf.

Die Erfindung wird nachfolgend anhand von Beispielen näher erörtert.

### Vergleichsbeispiele 1 bis 4:

212 kg Terephthalsäure, 88 kg Ethylenglykol, 5,5 kg 2%ige Antimonacetatlösung in Ethylenglykol wurden unter Rühren homogen vermischt, und das Gemisch in einen auf ca. 265 °C vorgeheizten und zu ca. 30 % mit Vorkondensat der vorhergehenden Charge und 3 kg 25%iger Titandioxid-Suspension in Ethylenglykol befüllten Veresterungsreaktor innerhalb von ca. 140 min unter Normaldruck eingespeist und während weiteren 30 min bei 265 °C und Normaldruck unter Abtrennung des Reaktionswassers verestert. Nach Zugabe von 14 g Phosphorsäure erfolgte die Vorkondensation unter allmählichem Absenken des Druckes auf 50 mbar (abs.) und gleichzeitigem Erhöhen der Temperatur auf ca. 275 °C innerhalb von 30 min. Das Vorkondensat wurde durch ein 15 µm-Filter in den Polykondensationsreaktor transferiert, der Druck innerhalb von 45 min auf weniger als 2 mbar (abs.) gesenkt und bei bis auf etwa 280 °C ansteigender Temperatur bis zur gewünschten Intrinsic-Viskosität von etwa 0,65 dl/g polykondensiert. Danach wurde der Polyester innerhalb von 20 min aus dem Polykondensationsreaktor ausgetragen und granuliert.

Das Granulat wurde in einem Schmelzextruder aufgeschmolzen und die Schmelze mit etwa 295 °C durch eine 34-Lochdüse mit einem Düsenlochdurchmesser von 0,25 mm versponnen. Die Fasern wurden in einem Blasschacht mit Querstromanblasung abgekühlt, anschließend mit Präparation (Typ Zimmer K 105) versehen, gebündelt, in eine Abzugsmaschine mit einem 9fach umschlungenen Galetten-Duo geführt und letztlich aufgewickelt.

Die Strecktexturierung der erhaltenen POY-Fasern erfolgte mit einer Friktionstexturiermaschine, Model Barmag FK6-S-900 mit einer 1-7-1 Bestückung Keramikscheiben (Ceratex C 0,85 und SPK-C 0,85-M) und einer Temperatur des ersten und zweiten Heizkörpers von 195 °C bzw. 160 °C sowie einem D/Y-Verhältnis von 1 : 2,15.

Die Faser-Kennwerte sind in Tabelle 1 aufgeführt.

### Beispiele 5 bis 11:

Die Ausführung erfolgte in gleicher Weise wie in den Vergleichsbeispielen 1 bis 4, jedoch wurde keine Phosphorsäure zugesetzt und stattdessen 15 min vor Beginn der allmählichen Absenkung des Reaktionsdruckes in den Veresterungsreaktor die in Tabelle 1 angegebenen Mengen Carboxyethylenphosphonsäure (CEPS) als warme Lösung in ca. 3 kg Ethylenglykol eingespeist.

Die Ergebnisse sind in Tabelle 2 zusammengestellt.

**Tabelle 1**

| Vergleichs-Beispiel Nr. | 1 | 2 | 3 | 4 |
|---|---|---|---|---|
| Veresterung: | | | | |
| CEPS [g] | - | - | - | - |

| Polyester: | | | | |
|---|---|---|---|---|
| CEPS [ppm P] | - | - | - | - |
| I.V. [dl/g] | 0,65 | 0,65 | 0,65 | 0,65 |
| DEG [Masse-%] | 0,7 | 0,7 | 0,7 | 0,7 |

| POY-Garn: | | | | |
|---|---|---|---|---|
| Aufspulgeschwindigkeit [m/min] | 3200 | 3200 | 3200 | 3300 |
| Gesamttiter [dtex] | 147 | 131 | 291 | 266 |
| Dehnung [%] | 124 | 127 | 139 | 118 |
| Festigkeit [cN/tex] | 24,3 | 26 | 24 | 24 |

| DTY-Garn: | | | | |
|---|---|---|---|---|
| Texturiergeschwindigkeit [m/min] | 600 | 700 | 700 | 650 |
| Verstreckverhältnis 1: | 1,66 | 1,64 | 1,69 | 1,65 |
| Gesamttiter [dtex] | 90 | 81 | 175 | 163 |
| Dehnung [%] | 24 | 24 | 25 | 24 |
| Festigkeit [cN/tex] | 41 | 45 | 36 | 36 |

**Tabelle 2**

| Beispiel Nr. | 5 | 6 | 7 | 8 | 9 | 10 | 11 |
|---|---|---|---|---|---|---|---|
| Veresterung: | | | | | | | |
| CEPS [g] | 74 | 124 | 161 | 198 | 396 | 124 | 148,5 |

| Polyester: | | | | | | | |
|---|---|---|---|---|---|---|---|
| CEPS [ppm P] | 60 | 100 | 130 | 160 | 320 | 100 | 120 |
| I.V. [dl/g] | 0,63 | 0,63 | 0,63 | 0,66 | 0,66 | 0,63 | 0,64 |
| DEG [Masse-%] | 0,7 | 0,61 | 1,07 | 1,54 | 1,13 | 0,61 | 0,86 |

| POY-Garn: | | | | | | | |
|---|---|---|---|---|---|---|---|
| Aufspulgeschwindigkeit [m/min] | 3200 | 3200 | 3200 | 3200 | *) | 3200 | 3300 |
| Gesamttiter [dtex] | 147 | 142 | 146 | 145 | | 300 | 287 |
| Dehnung [%] | 126 | 141 | 136 | 145 | | 146 | 130 |
| Festigkeit [cN/tex] | 25,5 | 25 | 25,2 | 22 | | 23 | 22 |

| DTY-Garn: | | | | | | | |
|---|---|---|---|---|---|---|---|
| Texturiergeschwindigkeit [m/min] | 800 | 900 | 800 | 800 | *) | 900 | 900 |
| Verstreckverhältnis 1: | 1,73 | 1,72 | 1,73 | 1,73 | | 1,74 | 1,73 |
| Gesamttiter [dtex] | 88 | 84 | 88 | 90 | | 174 | 168 |
| Dehnung [%] | 22 | 20 | 25 | 29 | | 25 | 34 |
| Festigkeit [cN/tex] | 42 | 41 | 42 | 36 | | 34 | 24 |

| | | | | | | | |
|---|---|---|---|---|---|---|---|
| *) schlecht und ungleichmäßig verspinnbar | | | | | | | |

Die Intrinsic-Viskosität (I.V.) wurde bei 25 °C an einer Lösung von 500 mg Polyester in 100 ml eines Gemisches aus Phenol und 1,2-Dichlorbenzol (3 : 2 Gew.-Teile) gemessen.

Der Diethylenglykolgehalt (DEG) wurde gaschromatographisch im bei 200 °C im Bombenrohr erhaltenen Umesterungsgemisch von 1 g Polyester mit 30 ml Methanol und 50 mg/l Zinkacetat ermittelt.

Die Bestimmung der Festigkeit und der Bruchdehnung der Fasern erfolgte bei Raumtemperatur an einer Prüflänge von 200 mm für POY bzw. 500 mm für DTY mit einer Abzugsgeschwindigkeit von 2000 mm/min bei POY bzw. 1500 mm/min bei DTY.

Wie ein Vergleich der Beispiele 5 - 9 mit den Vergleichsbeispielen 1 - 2 ergibt, führt der erfindungsgemäße Zusatz bei gleichen Spinnbedingungen, insbesondere gleicher POY-Aufspulgeschwindigkeit bei Mengen entsprechend etwa 100 - 200 ppm Phosphor im Polyester zu höheren Dehnungswerten des POY, während bei geringeren Mengen entsprechend etwa 60 ppm P kein eindeutiger Effekt eintritt und bei deutlich höheren Mengen, zum Beispiel 320 ppm P, die Verspinnbarkeit stark beeinträchtigt wird. Die höheren Dehnungswerte des POY-Garnes ermöglichen eine Strecktexturierung mit um etwa 1/3 höherer Texturiergeschwindigkeit und einem um etwa 5 % höheren Streckverhältnis, bei Mengen bis zu etwa 140 ppm P ohne Beeinträchtigung der DTY-Eigenschaften und bei höheren Mengen, zum Beispiel 160 ppm P, unter allmählicher Verschlechterung der Festigkeit des DTY-Garnes. Aufgrund des höheren Streckverhältnisses ist es möglich, bei vorgegebenem DTY-Titer einen höheren POY-Titer zu erspinnen und somit den Durchsatz und die Wirtschaftlichkeit zu erhöhen. Ähnliche Schlüsse ergeben sich bei einem Vergleich der Beispiele 10 bzw. 11 mit den Vergleichsbeispielen 3 bzw. 4.

## Patentansprüche

1. Mit Aufspulgeschwindigkeiten von mindestens 3000 m/min ersponnene, vororientierte, nichtverstreckte Polyesterfaser, **dadurch gekennzeichnet, daß** der Polyester ein Copolyester mit überwiegend Ethylenterephthalat-Einheiten und bis zu 10 Masse-% von anderen Dicarbonsäuren und/oder Diolen abgeleiteten Einheiten sowie Carboxyphosphonsäure-Einheiten der Formel 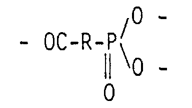 wobei R = C₁₋₁₀-Alkylen, -Cycloalkylen oder -Arylen ist, in einer 30 bis 500 ppm Phosphor, bezogen auf Polyester, entsprechenden Menge ist.

2. Polyesterfaser gemäß Anspruch 1, **dadurch gekennzeichnet, daß** die Menge an Carboxyphosphonsäure-Einheiten 60 bis 300 ppm Phosphor, bezogen auf Polyester, entspricht.

3. Polyesterfaser gemäß einem der Ansprüche 1 oder 2, **dadurch gekennzeichnet, daß** R gleich -CH₂CH₂- ist.

4. Polyesterfaser gemäß einem der Ansprüche 1 bis 3, **dadurch gekennzeichnet, daß** sie durch Strecktexturierung bei mindestens 500 m/min weiterverarbeitet wird.

5. Verfahren zur Herstellung einer vororientierten, nichtverstreckten Polyesterfaser durch Veresterung von Terephthalsäure mit Ethylenglykol, die zu einem geringen Teil durch andere Dicarbonsäuren und/oder andere Diole ersetzt sein können, nachfolgende Vorkondensation und Polykondensation sowie Verspinnen in der Schmelze des erhaltenen Polyesters bei Aufspulgeschwindigkeiten von mindestens 3000 m/min, **dadurch gekennzeichnet, daß** dem Reaktionsgemisch vor der Vorkondensation eine Carboxyphosphonsäure-Verbindung der Formel 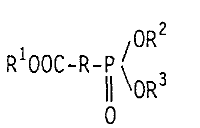 wobei zwei der Gruppen R¹, R² und R³ gleich -H und die dritte Gruppe gleich -H oder C₁₋₁₀-Alkyl, -Cycloalkyl oder -Aryl und R gleich C₁₋₁₀-Alkylen, -Cycloalkylen oder -Arylen ist, in einer 30 bis 500 ppm Phosphor, bezogen auf Polyester, entsprechenden Menge zugesetzt wird.

6. Verfahren gemäß Anspruch 5, **dadurch gekennzeichnet, daß** die Carboxyphosphonsäure-Verbindung zugesetzt wird, wenn etwa 50 bis 80 % der Carboxylgruppen der mindestens einen Dicarbonsäure des Veresterungsgemisches verestert sind.

7. Verfahren gemäß einem der Ansprüche 5 oder 6, **dadurch gekennzeichnet, daß** die Menge an Carboxyphosphonsäure-Verbindung 60 bis 300 ppm Phosphor, bezogen auf Polyester, entspricht.

8. Verfahren gemäß einem der Ansprüche 5 bis 7, **dadurch gekennzeichnet, daß** R gleich -CH₂CH₂-ist.

9. Verfahren gemäß einem der Ansprüche 5 bis 8, **dadurch gekennzeichnet, daß** sich eine Weiterverarbeitung durch Strecktexturierung bei mindestens 500 m/min anschließt.

## Claims

1. Pre-oriented, undrawn polyester fibre, spun at spooling speeds of at least 3,000 m/min, **characterised in that** the polyester is a copolyester with predominantly ethylene terephthalate units and up to 10% by weight of other dicarboxylic acids and/or units derived from diols and carboxyphosphonic acid units of the formula 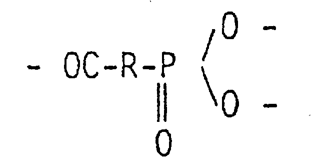 wherein R = C₁₋₁₀ alkylene, cycloalkylene or arylene in a quantity corresponding to 30 to 500 ppm phosphorus, based on polyester.

2. Polyester fibre according to claim 1, **characterised in that** the quantity of carboxyphosphonic acid units corresponds to 60 to 300 ppm phosphorus, based on polyester.

3. Polyester fibre according to either of claims 1 or 2, **characterised in that** R is -CH₂CH₂-.

4. Polyester fibre according to any one of claims 1 to 3, **characterised in that** it is further processed by stretch texturing at at least 500 m/min.

5. Method for producing a pre-oriented, undrawn polyester fibre by esterification of terephthalic acid with ethylene glycol which may be replaced to a small degree by other dicarboxylic acids and/or other diols, subsequent precondensation and polycondensation and spinning in the melt of the polyester obtained at spooling speeds of at least 3,000 m/min, **characterised in that** a carboxyphosphonic acid compound of the formula 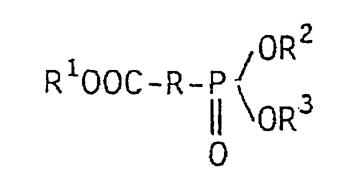 is added to the reaction mixture prior to precondensation, wherein two of the groups R¹, R² and R³ are -H and the third group is -H or C₁₋₁₀ alkyl, cycloalkyl or aryl and R is C₁₋₁₀ alkylene, cycloalkylene or arylene, in a quantity corresponding to 30 to 500 ppm phosphorus, based on polyester.

6. Method according to claim 5, **characterised in that** the carboxyphosphonic acid compound is added when about 50 to 80% of the carboxyl groups of the at least one dicarboxylic acid of the esterification mixture are esterified.

7. Method according to either of claims 5 or 6, **characterised in that** the quantity of carboxyphosphonic acid compound corresponds to 60 to 300 ppm phosphorus, based on polyester.

8. Method according to any one of claims 5 to 7, **characterised in that** R is -CH₂CH₂-.

9. Method according to any one of claims 5 to 8, **characterised in that** further processing by stretch texturing at at least 500 m/min follows.

## Revendications

1. Fibre de polyester non étirée, préorientée, bobinée à des vitesses de bobinage d'au moins 3000 m/min, **caractérisée en ce que** le polyester est un copolyester comportant principalement des unités de téréphtalate d'éthylèneglycol et jusqu'à 10 % en masse d'autres unités dérivées d'acides dicarboxyliques et/ou de diols ainsi que des unités d'acide carboxyphosphonique de formule 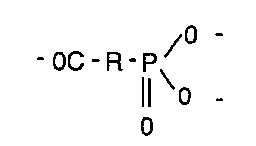 où R = alkylène, cycloalkylène or arylène en C₁₋₁₀, en une quantité de 30 à 500 ppm de phosphore, par rapport au polyester.

2. Fibre de polyester selon la revendication 1 **caractérisée en ce que** la quantité d'unités d'acide carboxyphosphonique correspond à 60 à 300 ppm de phosphore, par rapport au polyester.

3. Fibre de polyester selon l'une des revendications 1 et 2 **caractérisée en ce que** R est -CH₂CH₂-.

4. Fibre de polyester selon d'une des revendications 1 à 3 **caractérisée en ce qu'**elle est soumise à un traitement supplémentaire par étirage-texturation à au moins 500 m/min.

5. Procédé de production d'une fibre de polyester non étirée, préorientée par estérification de l'acide téréphtalique avec l'éthylèneglycol, qui peuvent être remplacés en faible proportion par d'autres acides carboxyliques et/où d'autres diols, puis précondensation et polycondensation ainsi que filage à l'état fondu du polymère obtenu à des vitesses de bobinage d'au moins 3000 m/min **caractérisé en ce qu'**un composé de type acide carboxyphosphonique de formule 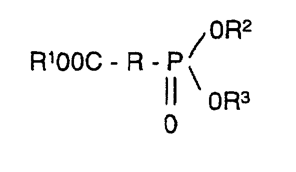 où deux des groupes R¹, R² et R³ sont H et le troisième est H ou alkyle, cycloalkyle ou aryle en C₁₋₁₀ et R est alkylène, cycloalkylène ou arylène en C₁₋₁₀ est ajouté au mélange réactionnel avant la précondensation en une quantité correspondant à 30 à 500 ppm de phosphore, par rapport au polyester.

6. Procédé selon la revendication 5, **caractérisé en ce que** le composé de type acide carboxyphosphonique est ajouté quand environ 50 à 80 % des groupes carboxyle du ou des acides dicarboxyliques du mélange d'estérification sont estérifiés.

7. Procédé selon l'une des revendications 5 et 6, **caractérisé en ce que** la quantité de composé de type acide carboxyphosphonique correspond à 60 à 300 ppm de phosphore, par rapport au polyester.

8. Procédé selon l'une des revendications 5 à 7, **caractérisé en ce que** R est -CH₂CH₂.

9. Procédé selon l'une des revendications 5 à 8, **caractérisé en ce qu'**un traitement supplémentaire par étirage-texturation à au moins 500 m/min a lieu ensuite.
